# EUROPEAN PATENT SPECIFICATION

(11) **EP 1 057 400 B1**
(45) Date of publication and mention of the grant of the patent: **09.08.2006**
(21) Application number: 00111050.1
(22) Date of filing: 31.05.2000
(51) Int. Cl.: A01F 25/14, A01F 25/08, F26B 5/04

(54) **Device for drying foodstuffs, particularly round bales of hay**
Vorrichtung zum Trocknen von Futtermitteln, insbesondere Heurundballen
Dispositif pour le sèchage de produits alimentaires, particulièrement des balles rondes à foin

(30) Priority: 03.06.1999 IT MN990024
(43) Date of publication of application: 06.12.2000
(73) Proprietor: Land Holding S.A., 1219 Luxembourg (LU)
(72) Inventor: Martinelli, Adriano, 46020 Villa Saviola (IT)
(74) Representative: Lampe, Sigmar

(56) References cited:
- CH-A- 688 217
- DE-A- 3 043 689
- US-A- 3 986 268
- US-A- 5 154 007
- US-A- 5 736 176

## Description

The invention relates to a device for drying foodstuffs, particularly fodder, such as round bales of hay.

It is known that forage products for feeding animals are currently stored to a large extent as round bales, and it is a rather common practice to subject said round bales to drying in order to allow their long-term preservation.

A device for drying plant products, such as round bales of hay, is described in CH 688 217 A. The device comprises a hermetic bell for the material to be dried, a vacuum pump, and temperature, pressure and humidity sensors for controlling the conditions inside the bell.

This same Applicant has proposed a plant based on the principle ot inserting one or more round bales to be dried in a hermetic container, producing a high degree of vacuum in said container, and said plant has turned out to be useful also for treating other substances, such as loose materials like grain.

This plant has yielded excellent results, but it has been found to be susceptible of improvements for which protection is now sought with the aim of optimizing the operating conditions.

This aim is achieved by a device for drying foodstuffs, particularly fodder, such as round bales of hay, according to the invention, comprising at least an hermetic container for the material to be treated and being connected to a vacuum pump, characterized in that said pump is suitable to determine a development of the pressure drop inside said container which causes the rupture of the tissues of said material, consequently substantially halting said drop.

Advantageously, the device is characterized in that it comprises means adapted to stop said vacuum pump when the tissues of the foodstuffs to be dried rupture, consequently essentially stopping the pressure drop in said container.

Further characteristics and advantages of the present invention will become better apparent from the detailed description of a preferred but not exclusive embodiment of the invention, illustrated only by way of non-limitative example in the accompanying drawings, wherein:
Figure 1 is a perspective view of the device according to the invention;
Figure 2 plots the pressure inside the container as a function of time during the treatment;
Figure 3 is an enlarged-scale sectional view of a portion of a leaf of alfalfa or lucerne after the treatment.

With reference to the above figures, 1 generally designates a hermetic container comprising the side wall 1a, provided with a bottom and with a lid 1b which can be opened; the container is made of a substantially non-deformable material such as steel and has such dimensions as to be able to contain a round bale 2.

Said container is connected, by means of the pipe 3, to the vacuum pump 4, which is driven by the electric motor 5, and is provided with a valve 6 for restoring atmospheric pressure inside it at the end of the treatment.

This operation is provided in a conventional manner.

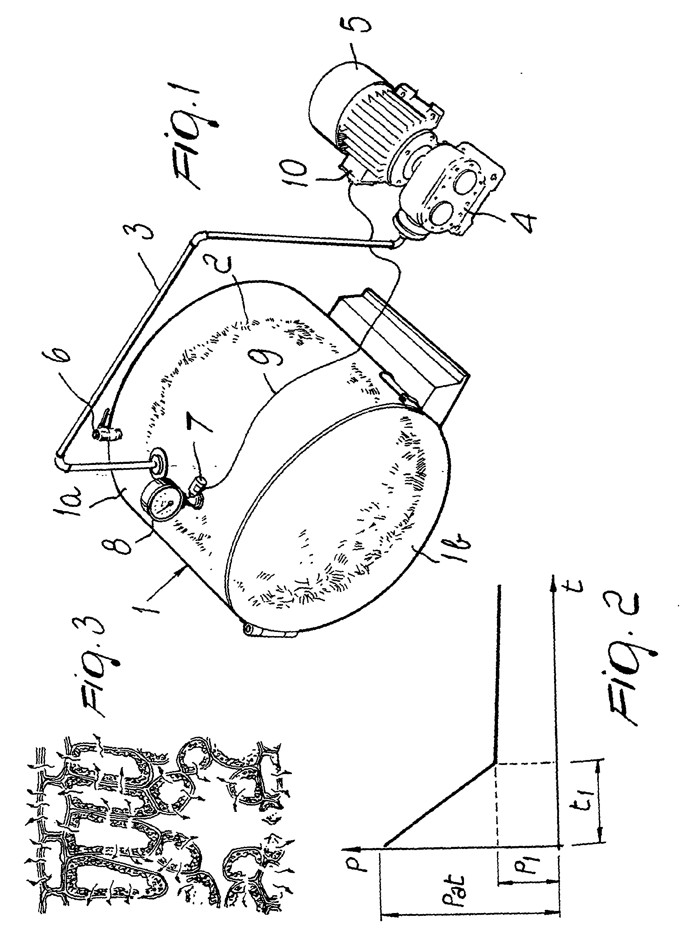

The main feature of the invention consists in that the vacuum pump 4 is dimensioned so as to be able to determine, inside the container 1, a development of the pressure drop which is so sudden as to cause the rupture of the vegetable tissues of the hay, consequently causing the escape of the cell sap that constitutes the watery component of the hay and is illustrated by the small arrows of Figure 3.

Once said rupture has occurred, the pressure drop inside the container 1 substantially stops.

This phenomenon is visualized by the chart of Figure 2, which plots the pressure inside the container 1 as a function of time: said chart shows the sudden pressure drop that occurs, in a very short time t₁, from the value of atmospheric pressure Pₐₜ to the value P₁, and during this step the vegetable tissues increase in volume continuously until, when they reach the pressure P₁, they rupture; at this point the chart shows that the pressure substantially stops at the value P₁.

At the same time, a drop in the temperature of the round bale occurs.

It is quite evident that it would not be very convenient to continue operating the vacuum pump 4 after producing, by reaching the pressure P₁, the release of the water from inside of the vegetable tissues of the hay, and accordingly the device according to the invention provides for the presence of the sensor 7 for detecting the pressure inside the container 1; said sensor is installed on the coupling for connecting the pressure gauge 8 and is connected by means of the cable 9 to the controller 10 of the electric motor 5 that drives the pump 4; said controller 10 is programmed so as to stop the motor when sensor 7 receives the signal that the pressure value P₁, at which the pressure drop has substantially ceased, has been reached inside the container 1.

Part of the steam generated by the low-pressure evaporation of the water released by the vegetable tissues, as described, is removed by the pump 4 in the final stages of its operation; part of said steam condenses on the walls of the container 1; and finally, part of said steam clings to the stalks of the plant and will spontaneously change state when the round bale is removed from the container 1 and exposed to the air.

The round bale of hay is thus placed in a condition which is suitable to ensure long-term preservation, also thanks to the at least partial elimination of the factors that cause fermentation processes, mainly clostridia and their spores, and the resulting product has a higher content of nutrients, particularly proteins, than conventional products.

The temperature drop that has been produced also has positive effects on blocking fermentation and also reduces the danger of spontaneous combustion.

The described invention is susceptible of numerous modifications and variations being usable, for example to dry other kinds of foodstuff, such as cereals, grain and others. All such variants and modifications are therefore within the scope of the appended claims. All the details may also be replaced with other technically equivalent elements.

The disclosures in Italian Patent Application No. MN99A000024 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for drying foodstuffs, particularly fodder, such as round bales of hay, comprising at least one hermetic container (1) for the material (2) to be treated, a vacuum pump (4) and a sensor (7) connected thereto for determining the pressure during operation of the vacuum pump (4), **characterized by**
a controller (10) programmed to switch off the vacuum pump (4) when the sensor (7) detects a pressure P₁ at which the tissues of the foodstuffs rupture, said pressure being the pressure at which the drop in pressure inside the container (1) has substantially ceased.

## Patentansprüche

1. Vorrichtung zum Trocknen von Nahrungsmitteln, insbesondere Futter, wie zum Beispiel runde Heuballen, umfassend wenigstens einen hermetischen Behälter (1) für das zu behandelnde Material (2), eine Vakuumpumpe (4) and einen Sensor (7), der damit verbunden ist, zur Ermittlung des Drucks während des Betriebs der Vakuumpumpe (4), **gekennzeichnet durch**
eine Steuervorrichtung (10), die so programmiert ist, dass sie die Vakuumpumpe (4) abschaltet, wenn der Sensor (7) einen Druck P₁ ermittelt, bei welchem das Gewebe der Nahrungsmittel bricht, wobei besagter Druck der Druck ist, bei welchem der Druckabfall innerhalb des Behälters (1) im Wesentlichen beendet ist.

## Revendications

1. Dispositif pour sécher des aliments, particulièrement du fourrage, comme par exemple des bottes de foin rondes, comportant au moins un récipient hermétique (1) pour le matériau à traiter (2), une pompe à vide (4) et un capteur (7) branché avec celui-ci, pour déterminer la pression pendant l'opération de la pompe à vide (4), **caractérisé par**
un contrôleur (10), programmé afin de débrancher la pompe à vide (4) quand le capteur (7) détecte une pression P₁ à laquelle les tissus des aliments rompent, ladite pression étant la pression à laquelle la retombée de la pression à l'intérieur du récipient (1) a essentiellement pris fin.
